# EUROPÄISCHE PATENTSCHRIFT

(11) **EP 0 487 905 B1**
(45) Veröffentlichungstag und Bekanntmachung des Hinweises auf die Patenterteilung: **12.07.1995**
(21) Anmeldenummer: 91118237.6
(22) Anmeldetag: 25.10.1991
(51) Int. Cl.: F16K 3/02

(54) **Absperrarmatur mit U-förmiger Profildichtung**
Shut-off valve with U-shaped profiled seal
Vanne d'arrêt avec joint d'étanchéité profilé en forme de U

(30) Priorität: 28.11.1990 DE 4037862
(43) Veröffentlichungstag der Anmeldung: 03.06.1992
(73) Patentinhaber: Johannes Erhard, H. Waldenmaier Erben Süddeutsche Armaturenfabrik GmbH & Co., D-89522 Heidenheim (DE)
(72) Erfinder: Vogel, Friedrich, W-7920 Heidenheim (DE); Uhl, Günter, W-7920 Heidenheim (DE); Maier, Heinz, W-7921 Nattheim (DE); Ortwein, Heinz, W-7923 Königsbronn (DE); Marre, Lionel, W-7923 Ochsenberg (DE); Vollmar, Berthold, W-7920 Heidenheim (DE); Altenbrandt, Erhard, W-8889 Syrgenstein (DE); Niederberger, Walter, W-7924 Steinheim (DE); Weber, Jörg-W., W-7920 Heidenheim (DE); Geiger, Wolfgang, W-7924 Steinheim (DE); Zimmermann, Claus, W-7929 Gerstetten (DE); Souczek, Werner, D-73432 Aalen (DE)
(74) Vertreter: Seeger, Wolfgang, Dipl.-Phys.

(56) Entgegenhaltungen:
- DE-A- 3 009 983
- US-A- 1 801 237
- US-A- 2 942 841
- US-A- 3 223 381

## Beschreibung

Die Erfindung betrifft eine Absperrarmatur gemäß dem Oberbegriff des Patentanspruchs 1.

Eine solche Armatur ist aus der US-A-2 942 841 bekannt. Die Schieberplatte dieser Armatur liegt sowohl seitlich wie auch mit ihrem unteren Endbereich direkt an der Gehäusewand an, so daß, wenn ein starker Druck durch das Strömungsmedium auf die Schieberplatte ausgeübt wird, diese gegen die Gehäuse wand gedrückt wird und die Wand durch die Reibung beschädigt werden Kann.

Aus der EP-A1-0 141 023 ist eine andere Armatur bekannt, bei der eine runde Rundumdichtung in einer konkaven Ausbildung der Seitenwand des zurückgesetzten Abschnittes liegt, der nur in einer Gehäusehälfte vorgesehen ist. Diese Absperrarmatur weist den Nachteil auf, daß die Rundumdichtung nur eine linienförmige Berührung mit der anderen Gehäusehälfte, die an ihrer Innenseite völlig plan ist, hat. Dabei besteht die Gefahr, daß kleine Mengen des Strömungsmittels, insbesondere wenn es partikuläre Bestandteile hat, an der Dichtung vorbei auslecken können. Nachteilig ist ferner, daß diese Armatur nicht in beiden Durchflußrichtungen dichtschließend ist.

Aufgabe der vorliegenden Erfindung ist es, eine Absperrarmatur zu schaffen, die diese Nachteile vermeidet und kompakt und mit geringem Kosten- und Zeitaufwand herstellbar ist.

Diese Aufgabe ist durch die Merkmale des Anspruchs 1 gelöst.

Die den Seiten des Schiebers zugewandten Flächen dieser U-Dichtung weisen einen gleichbleibende Dicke auf. Im unteren Schließbereich ist jedoch die der Schieberkante zugewandte U-förmige Dichtung in Durchflußrichtung des Mediums verbreitert ausgeführt. Diese Ausführungsform trägt der Tatsache Rechnung, daß der untere Endbereich der Schieberplatte, weil er von der möglichen Schieberführung und Halterung besonders weit entfernt ist, besonders starke seitliche Auslenkungen erfährt.

Bei der üblichen Form der Dichtung besteht stets die Gefahr, daß durch die Auslenkung des unteren Schieberplattenendes die Schieberplattenkante an eine Kante des Gehäuses aufläuft und die schützende Beschichtung beschädigt. Hinzu kommt, daß durch dieses Auflaufen die Schieberplatte selber erheblich beschädigt werden kann. Hinzu kommt ferner, daß bei den klassischen Dichtungen mit gleichbleibender Oberfläche durch dieses seitliche Auslenken der Schieberplatte im unteren Endbereich die Armatur undicht und beschädigt wird.

Aufgrund der erfindungsgemäßen verbreiterten Form der dichtenden, in Schließstellung anliegenden Oberfläche des U-förmigen Dichtkörpers, nämlich einer Breite, die merklich breiter als diejenige der Schieberplatte ist, werden alle diese Nachteile vermieden. Wird die Schieberplatte in Schließstellung gefahren, so liegt sie so auf der dichtenden Oberfläche des U-förmigen Dichtkörpers auf, daß beiderseits der Schieberoberflächen noch ein hinreichendes Volumen der Dichtung vorhanden ist. Die Schieberplatte wird bei ihrer Führung in die Schließstellung mit der Endbereichsfläche so in den Dichtgummi hineingeführt, daß beiderseits der Schieberplatte noch ein Gummivolumen verbleibt. Wenn jetzt aufgrund eines starken Strömungsmitteldruckes die Schieberplatte seitlich ausgelenkt wird, wirkt das verbleibende Volumen des Dichtungsmaterials zwischen der Schieberplattenkante einerseits und der benachbarten Kante des Gehäuses andererseits zum einen als schützende Pufferung und zum anderen als Dichtung.

Auf diese Weise werden Beschädigungen sowohl an der Schieberplatte als auch am Gehäuse zwangsläufig und sicher vermieden.

Die Gehäusehälften sind zweckmäßigerweise so ausgebildet, daß sie dieser besonderen Formgebung des U-förmigen Dichtkörpers entsprechen. D.h. der Abstand der einander zugewandten Gehäuseflächen im Bereich des U-förmigen Dichtkörpers ist in diesem unteren Bereich größer als im seitlichen oberen Bereich der Gehäusehälften.

Mit der Erfindung werden erstaunlich viele Vorteile erzielt:
Ferner ist der Vorteil zu nennen, daß die Ausbildung der Nuten die Verwendung von Profildichtungen erlaubt, die schon aufgrund ihrer Form eine besonders gute Abdichtung der beiden Gehäusehälften gewährleisten. Zum einen wird dadurch eine wesentlich breitere Anlagefläche des Dichtkörpers oder Dichtprofils an den jeweiligen Gehäusehälften erzielt. Hinzu kommt, daß durch die Abwinkelung der Anlageflächen zwischen Dichtprofil und Gehäusehälften die Dichtungswirkung verstärkt wird.

Diese gute Dichtungswirkung wird durch Verschieben der Schieberplatte selber noch verstärkt. Die Schieberplatte muß nämlich beim Schließen der Armatur stets soweit heruntergefahren werden, daß der Dichtkörper im Schließstellungsendbereich, etwa in Verlängerung der Spindel, um einen Mindestbetrag eingedrückt wird. Gleichzeitig wird der Dichtkörper auch beiderseits dieser Spindelachse eingedrückt, und zwar ebenfalls in Schließbewegungsrichtung. Diese Kompression der Steges des Dichtkörpers verstärkt somit noch die Dichtwirkung, weil der Steg seitlich an die inneren Ränder der Nuten gedrängt wird. Das hat zur Folge, daß dann, wenn die Schieberplatte geschlossen ist und damit der Druck des Mediums am größten ist, die größte Dichtwirkung erzielt wird.

Ein wesentlicher Vorteil folgt daraus, daß bei aufeinandergesetzten Gehäusehälften diese Nuten eine in sich geschlossene Kammer bilden. Werden die Gehäusehälften zusammengeschraubt, so liegen die inneren Oberflächen der Randbereiche der Gehäusehälften direkt aufeinander. Auch wenn beide Gehäusehälften mit starkem Druck gegeneinander verschraubt werden, wird dadurch kein weiterer Druck auf den in der Kammer liegenden U-förmigen Dichtkörper ausgeübt. Die Formgebung, Maße und Material des Dichtkörpers sind so bemessen, daß er bei zusammengesetzten Gehäusehälften mit vorbestimmtem Druck gegen die Kammerwände anliegt. Dieser definierte Druck bleibt erhalten, auch wenn die beiden Gehäusehälften mit stärkerer Kraft zusammengeschraubt werden.

Beide Gehäusehälften können identisch zueinander ausgebildet sein. Diese Weiterbildung der Erfindung bringt den Vorteil mit sich, daß beide Teile des Gehäuses mit demselben Modell hergestellt werden können, wodurch die Herstellungskosten erheblich reduziert werden können.

Da die Nuten in den beiden Gehäusehälften kontinuierlich geführt sind, erhält man den weiteren Vorteil, daß die der Schieberplatte benachbarte Außenseite des Dichtkörpers, wenn die Schieberplatte heruntergefahren wird, auf seiner Länge gleichmäßig komprimiert wird.

Diese Ausführung der Nuten dergestalt, daß sie bei zusammengesetzten Gehäusehälften eine Kammer bilden, hat jedoch noch einen weiteren Vorteil. Gerade wegen der gleichmäßigen Kompression des Dichtkörpers bei hereingefahrener Schieberplatte ist es möglich, die seitliche Breite des Dichtkörpers schmal auszubilden, also mit einem kleineren Querschnitt. Gemeint ist dabei der Querschnitt von der vertikalen oder Spindelachse des Schiebergehäuses zu der Außenseite hin. Daraus wieder folgt, daß bei gleichem Außenumfang des Schiebergehäuses ein größerer Randbereich für die Bildung von Ausnehmungen oder Bohrungen zur Verfügung steht, die als Anflanschöffnungen verwendet werden können.

Daraus wieder folgt der weitere Vorteil, daß man die erfindungsgemäße Armatur nicht nur als Einklemmarmatur verwenden kann, sondern gleichzeitig auch, ohne Änderung der Konstruktion, als Endarmatur.

In diesem Zusammenhang muß auch auf folgenden Vorteil hingewiesen werden: Da die Nuten im Gehäuse als Ausnehmung vorgesehen sind, also keinen Einfluß auf den Abstand der Gehäuseplatten zueinander haben, ist es möglich, den Dichtkörper in Durchflußrichtung mit einer relativ großen Dimensionierung auszubilden. Diese mögliche große Dimensionierung ermöglicht wiederum die Ausbildung des Dichtkörpers mit einer relativ kleinen Dimensionierung quer zur Durchflußrichtung, und zwar bei gleichem Querschnittsvolumen des Dichtkörpers. Je geringer die zulässige Dimensionierung in Querschnittsrichtung ist, desto größer wiederum ist der Randbereich des Gehäusekörpers, der für Anflanschöffnungen zur Verfügung steht.

Vorteilhafterweise liegt der vorstehende Profilsteg des Dichtkörpers seitlich an den zurückgesetzten Innenseiten der beiden Gehäusehälften an.

Diese Weiterbildung der Erfindung erhöht wiederum die Dichtwirkung, da sie verhindert, daß Strömungsmedium auch nur bis zum Rand der Nut gelangen kann.

Nach einer anderen Weiterbildung der Erfindung enthält der zurückgesetzte Abschnitt in sich Ausnehmungen, wobei ein zusammenhängender Randbereich in der Ebene der ihm zugewandten Oberfläche der Schieberplatte in Längsbewegungsrichtung der Schieberplatte links und rechts neben der Nut und im von der Durchflußöffnung entfernten Bereich verbleibt.

Dieser zusammenhängende umlaufende Bereich weist zum einen den Vorteil auf, daß er eine gleichmäßige Führung der Schieberplatte gewährleistet. Ferner bringt er den Vorteil mit sich, daß seine Innenkanten als Abstreifkanten dienen, die in die Nuten eingedrungene partikuläre Stoffe von der Schieberplatte abstreifen.

Zweckmäßigerweise ist, komplementär zur Verbreiterung des Steges des U-förmigen Dichtkörpers im unteren Schließbereich, der innere Rand der Nut zu seiner Gehäusehälfte hin fliehend ausgebildet ist.

Die Nuten in den Gehäusehälften, welche gemeinsam die Kammer bilden, einerseits und die Breite des U-förmigen Dichtkörpers andererseits sind komplementär zueinander geformt. Der Dichtkörper füllt die gebildete Kammer auch in der unbelasteten Stellung im wesentlichen aus.

Der U-förmige Dichtkörper selber kann aus irgendeinem für seinen Zweck geeigneten Material bestehen, z. B. aus EPDM, aus unbewehrtem oder bewehrtem Elastomer.

Der U-förmige Dichtkörper kann im Querschnitt T-förmig ausgebildet und so angeordnet sein, daß die beiden Schenkel jeweils in einer der U-förmigen Nuten liegen während der Steg aus den Nuten zwischen deren inneren Rändern nach innen hin vorsteht.
Die U-förmige Dichtung aus EPDM, Elastomer oder einem anderen geeigneten Material bestehen. Sie ist vorzugsweise armiert, z.B. stahlarmiert.

Nach einer besonderen Ausführungsform der Erfindung sind das Querschnittsvolumen der Nuten einerseits und der Querschnitt des U-förmigen Dichtkörpers andererseits so bemessen, daß das Dichtprofil auch in unbelastetem Zustand mit gewünschter Vorspannung in dem Gehäuse liegt.

Die dem Schieber zugewandte Stegoberfläche des Dichtkörpers kann konvex ausgebildet sein. Mit dieser konvexen Ausbildung der Fläche, an der die Schieberplatte anliegt, wird die Flächenpressung reguliert. D.h. die Fläche, die benötigt wird, um eine einwandfreie Funktion zu gewährleisten, wird schon im Gußverfahren erreicht.

Die Konvexität ist nach einer Ausführungsform der Erfindung so bemessen, daß auch bei eingeschobener Schieberplatte an den äußeren Rändern der Stegoberfläche eine bestimmte Konvexität bleibt. Dadurch ergibt sich der Vorteil einer geringeren Reibfläche zwischen Schieberplatte und Dichtkörper. Ferner treten kleinere Betätigungskräfte auf. Hinzu kommt der Vorteil eine geringeren Verdrängungsvolumens des Elastomers und damit Verschleißes.

Vorteilhafterweiser ist die Dicke des Dichtkörpers so bemessen, daß er in unbelastetem Zustand einen Abstand zu den jeweils ihm zugewandten Nutenböden der Nutenkammer senkrecht zur Durchströmungsrichtung aufweist.

Diese Weiterbildung der Erfindung weist den Vorteil auf, daß bei Herunterfahren der Schieberplatte in Richtung auf die Schließstellung ein Aufnahmevolumen für das von der Schieberplatte verdrängte Volumen des Dichtkörpers vorhanden ist. Wenn die Gehäusehälften zusammengesetzt sind und die Schieberplatte herunterbewegt wird, wird der Dichtkörper durch die seitlichen Bereiche der Schieberplatte so verformt, daß er den Querschnitt der Kammer vollständig ausfüllt.

Üblicherweise sind Schieberplatten und dementsprechend auch der U-förmige Dichtkörper von Schieberarmaturen im unteren Endbereich halbkreisförmig ausgebildet.

Nach einer wiederum anderen Weiterbildung der vorliegenden Erfindung jedoch ist der untere Bereich des U-förmigen Dichtkörpers nur im unteren Endbereich kreissegmentförmig ausgebildet, während er von den seitlichen Bereichen dieser Kreissegmentform zu den parallelen Abschnitten hin im wesentlichen gradlinig ausgebildet ist. Der Dichtkörper ist entsprechend komplementär ausgebildet.

Der Grund für diese Formgebung ist folgender: Da der Dichtkörper in geschlossener Stellung seitlich dieses Spindelachsenpunktes bis zu den parallelen Rändern des Dichtkörpers hin überall etwa gleich tief in diesen eindringen soll, kommt man zu folgendem Ergebnis: Je nach Neigung dieses unteren, also konkaven Abschnittes muß die Eindringtiefe des Schiebers in Schließbewegungsrichtung erheblich tiefer sein als die Eindringtiefe senkrecht zur Oberfläche im Spindelachsenbereich dieses Teils. Je flacher die Krümmung oder Neigung des konkaven Bereiches des Dichtkörpers ist, um so weniger groß ist die notwendige Eindringtiefe des Schließkörpers in Schließbewegungsrichtung. Dies hat auch den Vorteil, daß man, weil Dichtkörper und Schließkörper, also Unterkante der Schieberplatte, seitlich in Richtung auf eine Rechtecksform hin ausgebildet sind, geringere Kräfte erforderlich sind, um die Armatur abzudichten.

Die Erfindung ist im folgenden anhand eines Ausführungsbeispiels und der beiliegenden Zeichnung näher erläutert. In letzterer zeigen:
- Fig. 1: eine Vorderansicht einer Schieberarmatur im Schnitt,
- Fig. 2: einen Schnitt längs der Linie II-II der Figur 1,
- Fig. 3: eine Seitenansicht einer Armatur im Schnitt, mit Kraftkolben und zentrisch angeordneter Spindel, sowie Draufsicht auf die untere Abschlußplatte, die gleichzeitig eine Anbauplatte ist,
- Fig. 4: eine Vorderansicht der Armatur,
- Fig. 5: die Draufsicht auf die Armatur mit weggelassenem Oberteil,
- Fig. 6: die mehrteilige Ausbildung der ausbaubaren Halterungen für verschiedene Antriebe,
- Fig. 7: den Übergang zwischen U-förmiger Dichtung und der Stopfdichtung,
- Fig. 8: einen Querschnitt der Kammer für die U-förmige Dichtung, und
- Fig. 9: die Form der U-Dichtung.

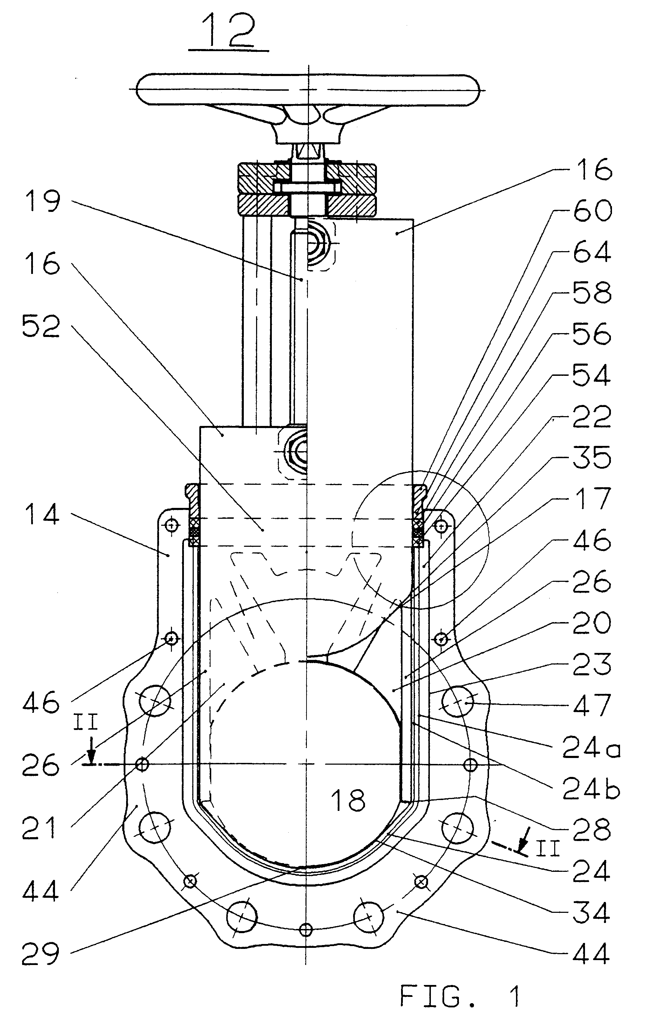

Die Figur 1 zeigt eine Vorderansicht einer Schieberarmatur 12 im Schnitt. In dieser Darstellung ist in der linken Hälfte die Schieberplatte 16 in der unteren Endstellung, also in der Schließstellung gezeigt, während in der rechten Hälfte der Figur 1 die Schieberplatte 16 in geöffneter Stellung dargestellt ist, in der sie die Durchflußöffnung 18 vollständig freigibt.

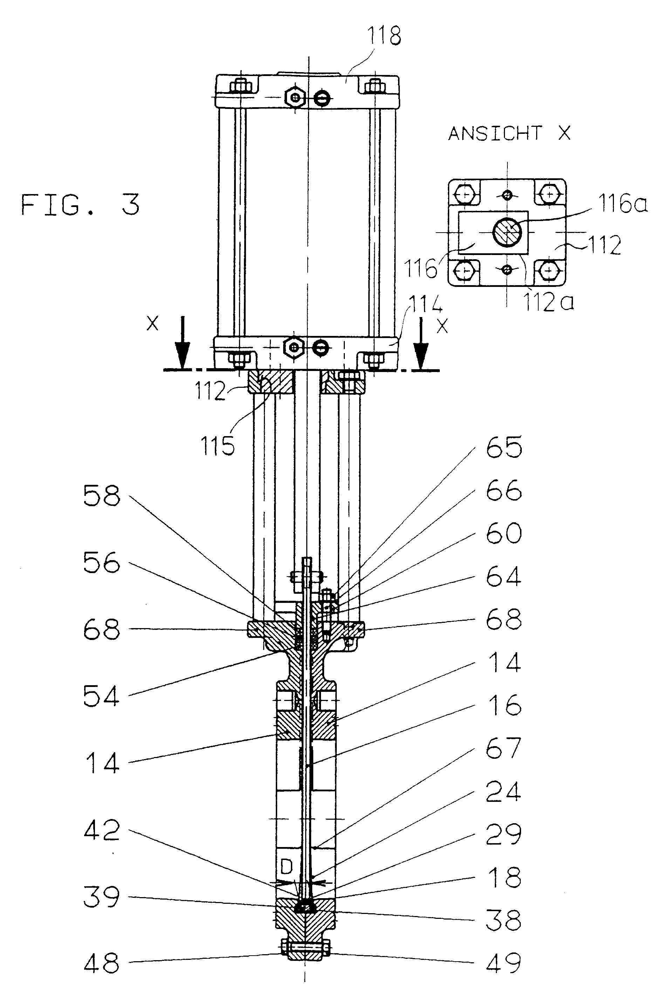

Die Gehäusehälfte 14 weist im mittleren Abschnitt oberhalb der Durchflußöffnung, also zwischen dieser und ihrem oberen Rand einen zurückgesetzten Abschnitt 20 auf, wodurch ein Teil der Schieberplattenkammer gebildet wird. Diese Gehäusehälfte 14 ist spiegelsymmetrisch zu der anderen Gehäusehälfte, so daß beide Gehäusehälften 14 im zusammengesetzten Zustand durch die jeweiligen zurückgesetzten Abschnitte 20 die Schieberplattenkammer bilden, wie man in Figur 3 sieht.

Diese durch den zurückgesetzten Abschnitt 20 gebildete Vertiefung ist so ausgebildet, daß rechts und links jeweils eine Führungsleiste 26 entsteht, an denen die ihr zugewandte Oberfläche der Schieberplatte 16 bei ihrer Bewegung geführt wird. Die Führungsleiste 26 ist unten bei 28 längs einer Linie durch Zurücksetzen des entsprechenden Gehäuseteils begrenzt. Auf die Bedeutung dieses linienartigen Abschlusses der Führungsleiste an ihrem unteren Ende, jedoch oberhalb der untersten Stelle der Durchflußöffnung 29, wird weiter unten noch eingegangen werden.

In ihrem unteren Endabschnitt ist die Durchflußöffnung 18 symmetrisch zu dem Spindelachsenpunkt 29, an der tiefsten Stelle der Durchflußöffnung, kreissegmentförmig ausgebildet. Wie man jedoch in Figur 1 sieht, ist dieser kreissegmentförmige Abschnitt nur auf etwa ein Drittel der Länge von der Spindelachse zu dem rechten Randbereich der Schieberplatte hin kreissegmentförmig ausgebildet. Von da an geht die Kontur der Durchflußöffnung 18 in einen im wesentlichen geradlinigen Teil 34 über, der bis zum seitlichen Randbereich reicht. Die Schieberplatte 16 ist an ihrem unteren Ende dementsprechend ausgebildet, wie bei 17 dargestellt.

Dieser im wesentlichen geradlinige Teil der unteren Schieberplattenkante 17 schneidet den inneren Rand der Führungsleisten 26 an einem Punkt 35, der in Figur 1 eingekreist ist. Die beschriebene Form der Führungsleisten 26 und der unteren Kante 17 der Schieberplatte weist besondere Vorteile auf:
Wie man bei 35 sieht, gibt es eine Stelle, an der die Schieberplatte 16 punktförmig an der jeweiligen Führungsleiste 26 anliegt. Solange kein Druck auf die Schieberplatte 16 ausgeübt wird, ist diese Anordnung problemlos. Wird jedoch die Schieberplatte in die Schließstellung verschoben, so tritt insbesondere kurz vor dem Erreichen der Schließendlage ein besonders hoher Druck auf die Schieberplatte 16 auf. Dadurch wird ein so hoher Anpreßdruck erzeugt, daß die Führungsleiste beschädigt werden kann.

Um diese Gefahr zu vermeiden ist die Führungsleiste 26 an ihrem unteren Ende bei 28 senkrecht abgeschnitten. Wenn die Schieberplatte 16 nach unten verfahren wird, wandert auch der Anlagepunkt 35 nach unten. Die Abmessungen sind jedoch, insbesondere auch durch die geradlinigen Teile 17 der unteren Schieberplattenkante so bemessen, daß dieser geradlinige Kantenabschnitt sich bereits unterhalb der Kante 28 der Führungsleiste 26 befindet, bevor die Schieberplatte 16 die untere Endlage erreicht, also bevor der volle Strömungsdruck auf die Schieberplatte 16 wirkt.

Wird jetzt die Schieberplatte 16 weiter nach unten in Richtung Schließstellung verschoben, wobei der Strömungsdruck auf die Schieberplatte 16 erheblich anwachsen kann, so besteht keine Gefährdung der Oberfläche der Führungsleiste 26 und auch keine Gefahr der Beschädigung der Schieberplatte 16, da letztere mit ihrem Randbereich flächenhaft seitlich an den Führungsleisten 26 anliegt. Ein punktförmiger Anpreßdruck kann somit gemäß der vorliegenden Erfindung im untersten Bereich der Schieberplattenstellung gar nicht entstehen.

Außerhalb der beiden Führungsleisten 26 ist eine U-förmige Nut 22 ausgebildet. Diese Nut 22 verläuft von der Ebene des zurückgesetzten hinteren Abschnittes 20 in die Gehäusehälfte 14 hinein, und die äußere Begrenzungswand 23 dieser Nut 22 erstreckt sich über die genannte Ebene des zurückgesetzten Abschnitts 20 hinaus bis zur Berührungsebene der Randbereiche 44 der Gehäusehälfte 14.

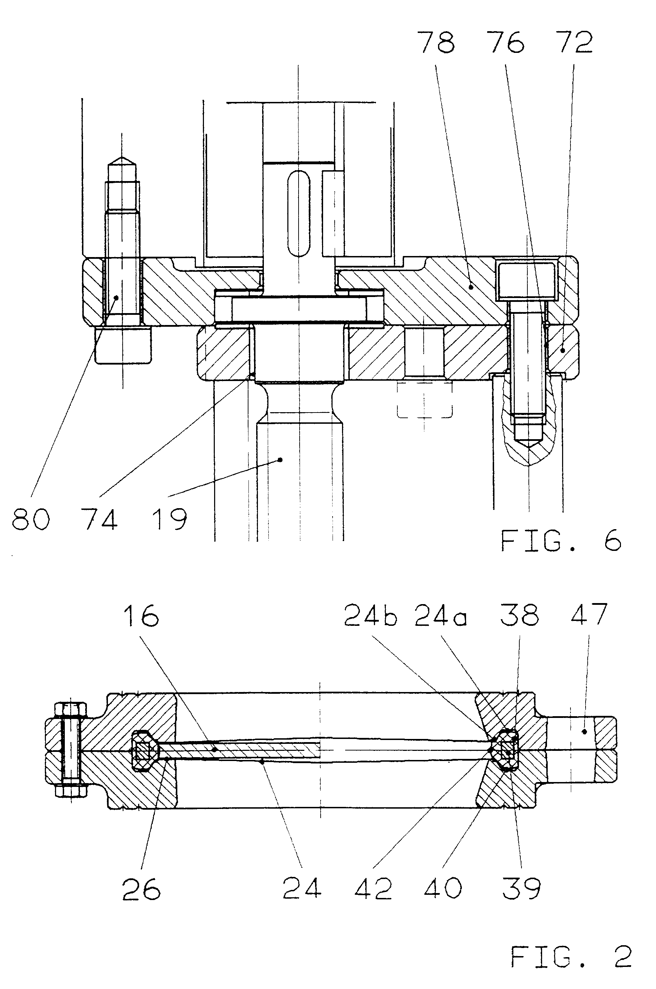

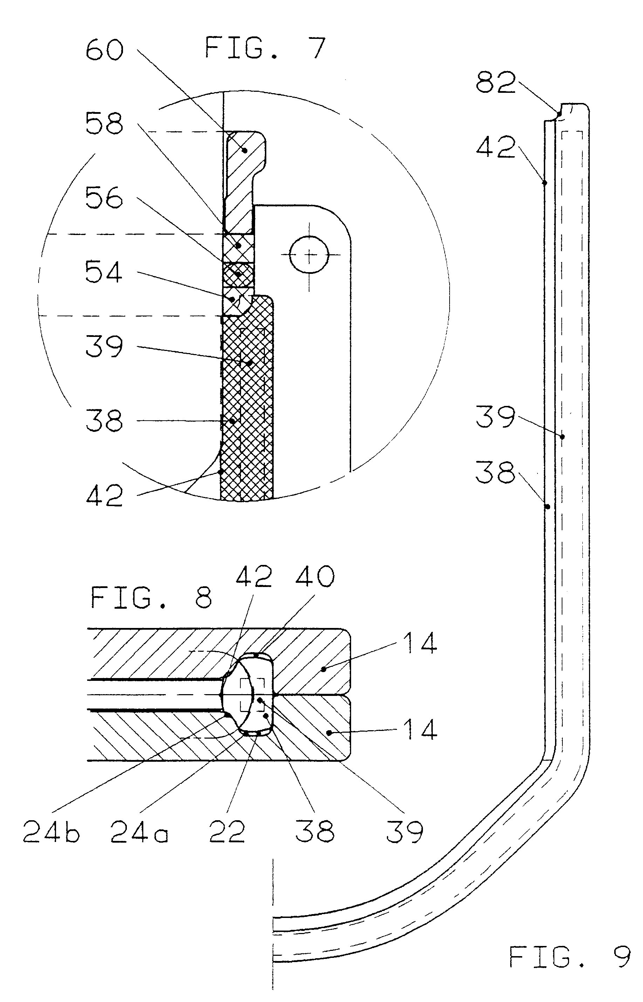

Die innere Begrenzungswand der Nut 22 verläuft von der Nutenbodenkante 24a schräg zum oberen Rand 24b, siehe auch Figuren 2 und 8. Letzterer befindet sich geringfügig unterhalb der führenden Oberfläche der Führungsleisten 26. Wie jedoch durch die Linie 24 angezeigt ist, vergleiche auch Figur 2, ist dieser obere Rand von dem linienförmigen unteren Ende 28 der Führungsleiste 26 zu dem Spindelachsenpunkt 29 zunehmend in die Gehäusehälfte 14 hinein versenkt ausgebildet. Dadurch entsteht zwischen den gegenüberliegenden oberen inneren Rändern 24 der beiden Nuten 22, wenn beide Gehäusehälften 14 miteinander verbunden sind, ein verbreiteter Abschnitt, siehe Figur 2, dessen Bedeutung im folgenden beschrieben wird.

In der durch die Nuten 22 gebildeten U-förmigen Dichtungskammer ist ein im Querschnitt profilförmig ausgebildeter, U-förmiger Dichtkörper 38 angeordnet. Dieser Dichtkörper enthält eine Stahlbewehrung 39, siehe Figur 2. Wie man aus letzterer sieht, füllt der Dichtkörper oder das Dichtungsprofil 38 die Nut 22 nicht vollständig aus sondern läßt im Nutenboden noch einen Verdrängungsraum 40 frei. Im übrigen ist der Querschnitt des Dichtkörpers 38 so geformt, daß er an dem äußeren Umfang der Nut 22 anliegt und ein Stegabschnitt 42 zwischen den Gehäusehälften 14 zur Schieberplattenkammer hin vorsteht. Die innere Oberläche dieses Stegabschnittes 42 erstreckt sich auf einen kleinen Bereich über die Führungsleisten 26, wobei die in Durchflußrichtung rechten bzw. linken Seiten des Dichtkörpers 38 dichtend an den entsprechend geformten Seitenflächen der Gehäusehälften 14 anliegen.

Wie man in Figur 2 besonders deutlich sieht, ist der mittlere, zur Schieberplatte hin vorstehende Stegabschnitt 42 des Dichtkörpers und von dem rechten und linken Seitenteil zur Spindelachse hin im unteren Bereich erheblich verbreitert.

Wenn die Schieberplatte 16 in Richtung ihrer Schließstellung verschoben wird, kommen ihre seitlichen Ränder mit der ihnen zugewandten Oberfläche des Stegabschnittes 42 des U-förmigen Dichtkörpers 38 zum Eingriff. Dabei wird in den beiden Schenkelabschnitten des U-förmigen Dichtkörpers 38 die Oberfläche des Stegabschnittes 42 jeweils nach außen verdrängt, wodurch eine sichere Abdichtung zwischen den jeweiligen Seiten der Schieberplatte 16 und den ihnen zugewandten Oberflächen des Dichtkörpers 38 im Schenkelbereich desselben erzielt wird. Das dabei verdrängte Volumen des Dichtungsprofils 38 kann in die Verdrängungsräume ausweichen.

In der Schließstellung liegt die Schieberplatte 16 mit ihrem unteren Randbereich an dem gekrümmten Abschnitt des inneren Stegabschnitts 42 des Teils des Dichtkörpers 38 an.

Zum besseren Verständnis der Bedeutung dieser beschriebenen Formgebung wird auf folgendes hingewiesen. Bei der üblichen Form des Dichtkörpers, der eine gleichbleibende Breite hat, besteht die Gefahr, daß unter Druckbeaufschlagung durch die Auslenkung des unteren Endes der Schieberplatte die Schieberplattenkante auf eine Kante des Gehäuses aufläuft und die schützende Beschichtung desselben beschädigt. Hinzu kommt, daß durch dieses Auflaufen die Schieberplatte selber erheblich beschädigt werden kann. Ferner weisen die klassischen Dichtungen den Nachteil auf, daß wegen der gleichbleibenden Oberfläche und wegen der Auslenkung des unteren Endes der Schieberplatte die Armatur im unteren Endbereich undicht und beschädigt wird, solange das Schieberplattenende ausgelenkt ist.

Aufgrund der erfindungsgemäß verbreiterten Form des U-förmigen Dichtkörpers 38, nämlich einer Breite, die merklich breiter als die Dicke der Schieberplatte 16 ist, werden alle diese Nachteile verhindert. Wird die Schieberplatte 16 in die Schließstellung gefahren, so liegt sie so an der dichtenden Oberfläche des Stegabschnitts 42 des U-förmigen Dichtkörpers an, daß beiderseits der Schieberplattenoberflächen noch ein hinreichendes Volumen der Dichtung vorhanden ist. Die Schieberplatte 16 wird bei ihrer Führung in die Schließstellung mit ihrer Endbereichsfläche so in den Dichtkörper 38 hineingeführt, daß beiderseits der Schieberplatte 16 noch ein Volumen des Stegabschnitts 42 des Dichtkörpers 38 verbleibt. Wenn jetzt aufgrund eines starken Strömungsdruckes die Schieberplatte 16 seitlich ausgelenkt wird, wirkt das verbleibende Volumen des Dichtungsmaterials zwischen der Schieberplattenkante einerseits und der benachbarten Kante 24 des Gehäuses andererseits zum einen als schützende Pufferung und zum anderen als Dichtung.

Wie man aus Figur 1 sieht, weisen die Nut 22 und der darin liegende Dichtkörper 38 von rechts nach links jeweils nur einen relativ kleinen Querschnitt auf. Somit ist der Randbereich 44 der Gehäusehälfte 14 frei für Schrauben 46 und 47. Die kleineren Bohrungen 46 sind für Schraubbolzen vorgesehen, mit denen die beiden Gehäusehälften 14 miteinander verbunden werden. Die größeren Bohrungen 47 sind als Anflanschbohrungen für anzuflanschende Rohre ausgebildet, oder als Führungsbohrungen für Bolzen, wenn die Armatur zwischen Rohrflanschen eingeklemmt wird.

Wie man dieser Figur entnehmen kann, kann die beschriebene Armatur sowohl als Absperrschieber zwischen zwei Rohren eingebaut, als auch direkt als Endarmatur verwendet werden.

Im oberen Bereich der Gehäusehälften 14 sieht man eine Kammer 52, welche die Querdichtung aufnimmt. Letztere besteht im Ausführungsbeispiel aus mehreren um die Platte umlaufenden Strängen 54, 56 und 58. Der untere Vierkantstrang 54 und der obere Vierkantstrang 58 bestehen beispielsweise aus Teflon. Zwischen diesen ist ein O-Ring 56 angeordnet, der aus einem Elastomer besteht.

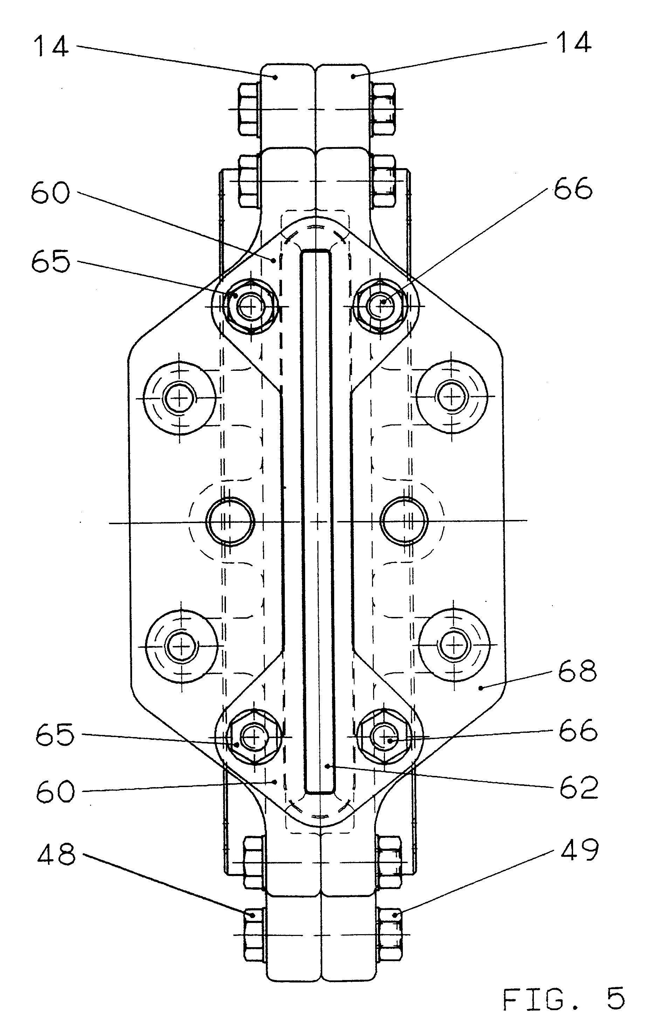

Diese Querdichtungskammer 52 ist oben durch eine Brille 60 abgeschlossen, die eine Ausnehmung 62 zur Durchführung der Schieberplatte 16 enthält, siehe Figur 5. Die Brille 60 ist mit ihrem unteren Endbereich 64 in die Querdichtungskammer eingesetzt. In dieser Lage drückt sie die Dichtungsstränge 54, 56 und 58 mit gewünschtem Vordruck gegeneinander.

Weitere Einzelheiten dieser Brille 60 und deren Montage sind anhand der Figur 5 näher beschrieben.

Die Figur 3 zeigt eine Seitenansicht der Armatur im Schnitt. Der obere Teil, welcher die Spindel 19 enthält und zum Betätigen der Schieberplatte 16 dient, ist, ähnlich wie der Oberteil bei der Figur 1, im folgenden nicht näher beschrieben.

In dieser Figur 3 sieht man, daß die beiden Gehäusehälften 14 symmetrisch ausgebildet sind. Die Schieberplatte 16 ist in ihrer Schließstellung dargestellt, in der sie unten bei 29 an dem vorstehenden Stegabschnitt 42 des Dichtkörpers 38 anliegt. Die beiden Gehäusehälften sind durch Schrauben 48 und Muttern 49 miteinander verbunden.

Im unteren Bereich dieser Figur 3 sieht man gut, daß unterhalb von 67 der innere Rand der Nut 22 sich in der rechten Gehäusehälfte mit zunehmender Näherung an den unteren Randbereich nach rechts geneigt verläuft, während er in der linken Gehäusehälfte nach links geneigt verläuft. Auf diese Weise ist der Abstand D der inneren Ränder der Nuten 22 am unteren Ende der Durchflußöffnung 18 erheblich breiter als die Schieberplatte 16. Die Oberfläche des der Schieberplatte 16 zugewandten Stegabschnittes 42 des U-förmigen Dichtkörpers 38 ist ebenfalls erheblich breiter als die Dicke der Schieberplatte 16.

Wie man in dieser Figur 3 sieht, ist der obere Teil der rechten Gehäusehälfte 14 als nach rechts vorstehender Ausleger 68 ausgebildet, während der obere Teil der linken Gehäusehälfte 14 nach links als Ausleger augebildet ist. In diesem Ausleger 68, welcher etwa auf der Höhe der Querdichtungskammer ausgebildet ist, sind Schrauben oder Bolzen 66 und Muttern 65 zur Befestigung der Brille 60 eingeschraubt.

Im übrigen bezeichnen gleiche Bezugszeichen dieselben Teile wie die entsprechenden Bezugszeichen in Figur 1.

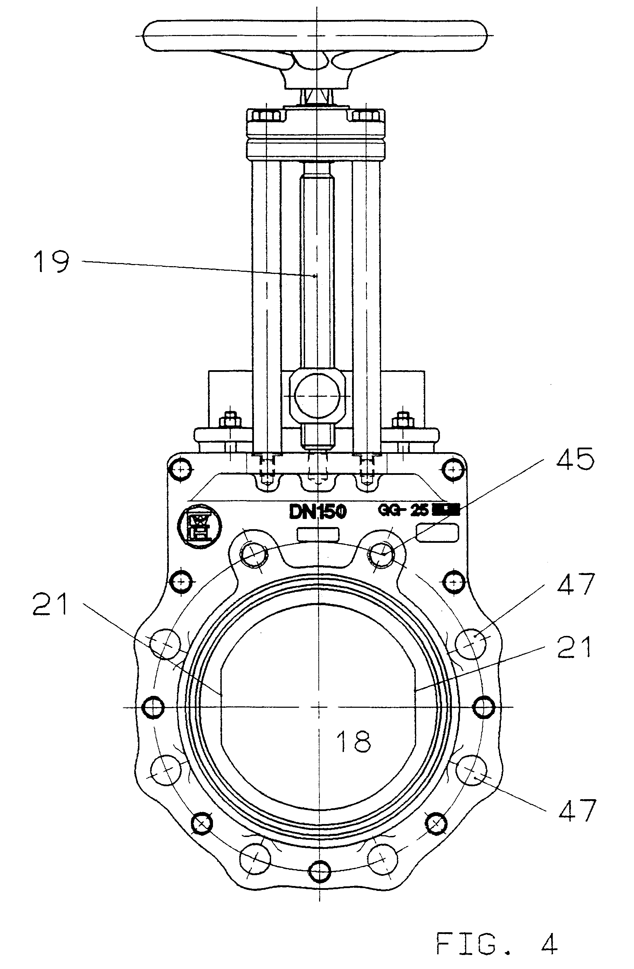

Die Figur 4 zeigt eine Vorderansicht der Armatur. Wie man aus dieser Figur sieht, ist der Querschnitt der Durchflußöffnung 18 rechts und links auf einer Länge 21 etwa geradlinig begrenzt. Der übrige Umfang der Strömungs- oder Durchflußöffnung 18 ist oben und unten kreissegmentförmig ausgebildet. In dieser Figur sieht man besonders deutlich, daß die Ausnehmungen 47 zum Anflanschen am Rohr oder auch zum Anflanschen von Rohren geeignet sind. Ferner sind Gewindesacklöcher 45 oberhalb der Durchflußöffnung 18 vorgesehen.

Der obere Antriebsteil der Armatur, der die Spindel 19 und damit die Schieberplatte 16 antreibt, ist nicht näher beschrieben, da er nicht erfindungswesentlich ist.

Die Figur 5 zeigt eine Draufsicht auf die Armatur mit abgenommenem Antriebsteil. In der Figur sieht man auch die Ausleger 68 und auch die eingesetzte Brille 60. Die Brille ist mittels Schrauben oder Bolzen 66 und Muttern 65 mit den Gehäusehälften 14 miteinander verschraubt. Ferner sieht man deutlich die Ausnehmung 62, welche zur Aufnahme der Schieberplatte 16 dient.

Die Figur 6 zeigt das obere Ende des Antriebsteils. Wie man in dieser Figur sieht, ist eine Endplatte 72 vorgesehen, welche eine außermittige Ausnehmung 74 zur Aufnahme des oberen Endes der Spindel 19 enthält. Gemäß der vorliegenden Erfindung ist diese Endplatte 72 jedoch relativ schmal ausgeführt, da sie nicht die gesamte Stabilität sichern muß. Vielmehr ist diese Platte 72 als Adapterplatte ausgebildet. Sie enthält weitere Öffnungen 76, über welcher eine weitere Platte 78 mit der Endplatte 72 verbunden werden kann. Diese obere Platte 78, die leicht auswechselbar ist, weist wiederum Öffnungen 80 zur Montage weiterer Antriebsteile (z.B. Elektroantrieb, Kraftkolbenantrieb) auf. Gemäß dieser Weiterbildung der Erfindung ist es möglich, eine Armatur einschließlich der Spindelhalterung so auszubilden, daß sie durch leichtes Auswechseln der weiteren Platte 78 und durch deren Verbindung mit der Adapterplatte 72 umgerüstet werden kann. Die Umrüstung, z. B. von Handantrieb auf Elektroantrieb, ist in denkbar einfacher Weise ausführbar, ohne die gesamte Armatur auseinandernehmen zu müssen.

In Figur 7 sieht man den Übergang zwischen dem U-förmigen Dichtkörper 38 und den Querdichtungssträngen 54, 56 und 58. Im oberen Endbereich jedes der beiden Schenkel endet der nach innen vorstehende Stegabschnitt 42 vor dem anderen Teil des Dichtkörpers 38. In dieser Ausnehmung liegt der untere Strang, der quer um die Schieberplatte 16 verläuft.

Wie man in der Draufsicht der Figur 8 sieht, weist auch der Schenkelabschnitt des Dichtkörpers 38 eine abgerundete Ausnehmung 82 auf. Diese Ausnehmung 82 ermöglicht eine satte seitliche Anlage des Dichtungsstranges 54. Dieser liegt somit sowohl unten als auch seitlich dichtend in der Ausnehmung des Dichtkörpers 38. Auf diese Weise wird eine besonders gute Dichtung gewährleistet.

Die Figur 9 zeigt eine Ansicht eines Teils des Dichtkörpers 38. Mit gestrichelten Linien ist die Lage des Bewehrungsstahls 39 angedeutet. Ferner sieht man in dieser Figur, daß der nach innen vorstehende Profilsteg 42 unterhalb des oberen Randes des Schenkels des Dichtkörpers 38 endet. Außerdem sieht man die abgerundete Ausnehmung 82 in dem Querteil des Dichtkörpers 38, welche abgerundete Ausnehmung die satte Anlage des Dichtungsstranges 54 ermöglicht.

Aus Figur 7 sieht man ferner, daß der äußere Rand der Querdichtungskammer 52 gegenüber dem äußeren Rand der Nuten 22 nach innen versetzt ist. Durch diese Versetzung wird ebenfalls eine besonders gute Dichtleistung gewährleistet. Diese wird noch dadurch verstärkt, daß die Brille 60 mit ihrem unteren Abschnitt 64 von oben auf den Vierkantstrang 58 drückt. Durch diesen Einsatz der Brille 60 werden die Dichtungsstränge 54, 56 und 58 mit der gewünschten Vorspannung gegeneinander gedrückt.

## Patentansprüche

1. Absperrarmatur (12) mit
zwei Gehäusehälften (14), die eine Durchflußöffnung (18) umschließen und im Randbereich (44) in einer Berührungsebene teilweise aneinander anliegend miteinander verbunden sind,
von denen mindestens eine Gehäusehälfte (14) einen gegenüber der Berührungsebene zurückgesetzten inneren Abschnitt (20) zur Aufnahme einer Schieberplatte (16) aufweist,
und mit einer diesen inneren zurückgesetzten Abschnitt (20) umgebenden U-förmigen Nut, die sich von der Ebene des zurückgesetzten Abschnittes in diese Gehäusehälfte (14) hinein erstreckt und deren äußere Begrenzungswand (23) sich über diese Ebene hinaus bis zur Berührungsebene der Randbereiche (44) erstreckt, und mit einer in dieser Nut (22) angeordneten Profildichtung (38), deren Steg (42) über den Rand der Nut (22) zur Schieberplatte (16) bzw. Durchflußöffnung (18) hin vorsteht,
dadurch gekennzeichnet, daß der zur Schieberplatte (16) hin vorstehende Stegabschnitt (43) des U-förmigen Dichtkörpers (38) im unteren Schließbereich (24) verbreitert ist.

2. Absperrarmatur nach Anspruch 1, dadurch gekennzeichnet, daß gegenüber der Berührungsebene der Gehäusehälften (14) im unteren Schließbereich komplementär zur Verbreiterung des Steges des U-förmigen Dichtkörpers (38) der innere Rand der Nut (22) zu seiner Gehäusehälfte (14) hin fliehend ausgebildet ist.

3. Absperrarmatur nach einem der vorhergehenden Ansprüche, dadurch gekennzeichnet, daß beide Gehäusehälften (14) identisch zueinander ausgebildet sind.

4. Absperrarmatur nach Anspruch 1 bis 3, dadurch gekennzeichnet, daß der vorstehende Profilsteg des Dichtkörpers (38) seitlich an den zurückgesetzten Innenseiten der beiden Gehäusehälften (14) anliegt.

5. Absperrarmatur nach einem der vorhergehenden Ansprüche, dadurch gekennzeichnet, daß der zurückgesetzte Abschnitt (20) in sich Ausnehmungen enthält, wobei ein zusammenhängender Randbereich in der Ebene der ihm zugewandten Oberfläche der Schieberplatte (16) in Längsbewegungsrichtung der Schieberplatte (16) links und rechts neben der Nut (22) und im von der Durchflußöffnung (18) entfernten Bereich verbleibt.

6. Absperrarmatur nach einem der vorhergehenden Ansprüche, dadurch gekennzeichnet, daß der U-förmige Dichtkörper (38) im Querschnitt T-förmig ausgebildet und so angeordnet ist, daß die beiden Schenkel jeweils in einer der U-förmigen Nuten (22) liegen während der Steg aus den Nuten (22) zwischen deren inneren Rändern nach innen hin vorsteht.

7. Absperrarmatur nach einem der vorhergehenden Ansprüche, dadurch gekennzeichnet, daß der U-förmige Dichtkörper (38) aus EPDM, Elastomer oder einem anderen geeigneten Material besteht.

8. Absperrarmatur nach einem der vorhergehenden Ansprüche, dadurch gekennzeichnet, daß der Dichtkörper (38) armiert, z.B. stahlarmiert ist.

9. Absperrarmatur nach einem der vorhergehenden Ansprüche, dadurch gekennzeichnet, daß das Querschnittsvolumen der Nuten (22) einerseits und der Querschnitt des U-förmigen Dichtkörpers (38) andererseits so bemessen sind, daß der Dichtkörper auch in unbelastetem Zustand mit gewünschter Vorspannung in dem Gehäuse liegt.

10. Absperrarmatur nach einem der vorhergehenden Ansprüche, dadurch gekennzeichnet, daß die dem Schieber zugewandte Stegoberfläche des Dichtungskörpers (38) konvex ausgebildet ist.

11. Absperrarmatur nach einem der vorhergehenden Ansprüche, dadurch gekennzeichnet, daß die Konvexität so bemessen ist, daß auch bei eingeschobener Schieberplatte (16) an den äußeren Rändern der Stegoberfläche eine bestimmte Konvexität bleibt.

12. Absperrarmatur nach einem der vorhergehenden Ansprüche, dadurch gekennzeichnet, daß die Dicke des Dichtskörpers (38) so bemessen ist, daß er in unbelastetem Zustand einen Abstand (40) zu den jeweils ihm zugewandten Nutenböden der Nutenkammer senkrecht zur Durchströmungsrichtung aufweist.

13. Absperrarmatur nach einem der vorhergehenden Ansprüche, dadurch gekennzeichnet, daß die Schieberplatte (16) im unteren Endbereich nur nahe der Spindelachse kreissegmentförmig und von dort aus im wesentlichen geradlinig zu den parallelen Rändern des Schiebers hin ausgebildet ist und der Dichtkörper (38) komplementär ausgebildet ist.

14. Absperrarmatur mit einer Schieberplatte (16), die seitlich auf an den Gehäuse ausgebildeten Führungsleisten geführt ist, nach einem der vorhergehenden Ansprüche, dadurch gekennzeichnet, daß die seitlichen Führungsleisten der Schieberplatte (16) an ihren unteren Endabschnitten rechtwinklig zur Längsrichtung der Führungsleiste (26) und parallel zur Schieberplattenebene zurückgesetzt sind.

15. Absperrarmatur nach einem der vorhergehenden Ansprüche, dadurch gekennzeichnet, daß der U-förmige Dichtungskörper (38) in seinen oberen Endabschnitten im Bereich der Stopfbuchsenkammer eine etwa kreissegmentförmige Ausnehmung (82) aufweist.

## Claims

1. Shut-off fitting (12) comprising two housing halves (14) which enclose a flow opening (18) and in the edge region (44) are connected together in partial engagement in a plane of contact,
of which at least one housing half (14) comprises an inner portion (20) set back with respect to the plane of contact for receiving a slide plate (16),
and a U-shaped groove which surrounds said inner set-back portion (20) and which extends from the plane of the set-back portion into said housing half (14), the outer boundary wall (23) of which extending beyond said plane up to the plane of contact of the edge regions (44), and a profile seal (38) which is arranged in said groove (22) and the web (42) of which projects over the edge of the groove (22) towards the slide plate (16) or flow opening (18),
characterised in that the web portion (43) of the U-shaped sealing body (38) projecting towards the slide plate (16) is widened in the lower closure region (24).

2. Shut-off fitting according to claim 1, characterised in that opposite the plane of contact of the housing halves (14) in the lower closure region the inner edge of the groove (22) is made flared towards its housing half (14) complementary to the widening of the web of the U-shaped sealing body (38).

3. Shut-off fitting according to any one of the preceding claims, characterised in that the two housing halves (14) are made identical to each other.

4. Shut-off fitting according to claims 1 to 3, characterised in that the projecting profile web of the sealing body (38) bears laterally on the set-back inner sides of the two housing halves (14).

5. Shut-off fitting according to any one of the preceding claims, characterised in that the set-back portion (20) contains recesses, a connected edge region remaining in the plane of the surface of the slide plate (16) facing said portion in the longitudinal movement direction of the slide plate (16) to the left and right of the groove (22) and in the region remote from the flow opening (18).

6. Shut-off fitting according to any one of the preceding claims, characterised in that the U-shaped sealing body (38) is made T-shaped in cross-section and is so arranged that the two legs each lie in one of the U-shaped grooves (22) whilst the web projects from the grooves (22) inwardly between the inner edges thereof.

7. Shut-off fitting according to any one of the preceding claims, characterised in that the U-shaped sealing body (38) consists of EPDM, elastomer or another suitable material.

8. Shut-off fitting according to any one of the preceding claims, characterised in that the sealing body (38) is reinforced, for example steel reinforced.

9. Shut-off fitting according to any one of the preceding claims, characterised in that the cross-sectional volume of the grooves (22) on the one hand and the cross-section of the U-shaped sealing body (32) on the other hand are so dimensioned that the sealing body lies in the housing with the desired pretension even in the unloaded state.

10. Shut-off fitting according to any one of the preceding claims, characterised in that the web surface of the sealing body (38) facing the slide is made convex.

11. Shut-off fitting according to any one of the preceding claims, characterised in that the convexity is so dimensioned that even when the slide plate (16) is inserted a predetermined convexity remains at the outer edges of the web surface.

12. Shut-off fitting according to any one of the preceding claims, characterised in that the thickness of the sealing body (38) is so dimensioned that in the unloaded state it is at a distance (40) from the respective opposing groove bottoms of the groove chamber perpendicularly to the flow direction.

13. Shut-off fitting according to any one of the preceding claims, characterised in that the slide plate (16) is made in the form of a circular segment in the lower end region only adjacent the spindle axis and from there is formed substantially rectilinearly towards the parallel edges of the slide, the sealing body (38) being of complementary form.

14. Shut-off fitting comprising a slide plate (16) guided laterally on guide strips fromed on the housing according to any one of the preceding claims, characterised in that the lateral guide strips of the slide plate (16) are set back at their lower end portions perpendicularly to the longitudinal direction of the guide strip (26) and parallel to the plane of the slide plate.

15. Shut-off fitting according to any one of the preceding claims, characterised in that the U-shaped sealing body (38) comprises a substantially circular segmental recess (82) in its upper end portions in the region of the packing box chamber.

## Revendications

1. Vanne de sectionnement (12) comportant
deux moitiés de carter (14), qui entourent une ouverture de passage (18) et sont reliées entre elles dans la zone marginale (44) en s'appliquant en partie l'une contre l'autre, dans un plan de contact, et
dont l'une au moins (14) possède une partie intérieure (20), qui est en retrait par rapport au plan de contact et sert à recevoir une plaque formant tiroir (16), et
une rainure en forme de U, qui entoure cette partie intérieure en retrait (20) et s'étend dans cette moitié de carter (14) à partir du plan de la partie en retrait, et dont la paroi limite extérieure (23) s'étend au-delà de ce plan jusqu'au plan de contact des zones marginales (44), et comportant une garniture d'étanchéité profilée (38), qui est disposée dans cette rainure (22) et dont la base (42) fait saillie au-delà du bord de la rainure (22) en direction de la plaque formant tiroir (16) ou de l'ouverture de passage (18),
caractérisée en ce que la partie formant base (43), qui fait saillie en direction de la plaque formant tiroir (16), du corps d'étanchéité en forme de U (38) est élargie dans sa zone inférieure de fermeture (24).

2. Vanne de sectionnement selon la revendication 1, caractérisée en ce que le bord intérieur de la rainure (22) est agencé de manière à se terminer en direction de la moitié de carter (14) de la vanne, dans laquelle elle se trouve, en vis-à-vis du plan de contact de la moitié de carter (14), dans la zone inférieure de fermeture, d'une manière complémentaire à l'élargissement de la base du corps d'étanchéité en forme de U (38).

3. Vanne de sectionnement selon l'une des revendications précédentes, caractérisée en ce que les deux moitiés de carter (14) sont identiques.

4. Vanne de sectionnement selon les revendications 1 à 3, caractérisée en ce que la base profilée saillante du corps d'étanchéité (38) s'applique latéralement contre les côtés intérieurs en retrait des deux moitiés de carter (14).

5. Vanne de sectionnement selon l'une des revendications précédentes, caractérisée en ce que la partie en retrait (20) contient des évidements, une partie marginale continue subsistant, dans le plan de la surface, tournée vers cette partie, de la plaque formant tiroir (7), à droite et à gauche, dans la direction longitudinale de cette plaque formant tiroir (16), à côté de la rainure (22) et dans la zone éloignée de l'ouverture de passage (18).

6. Vanne de sectionnement selon l'une des revendications précédentes, caractérisée en ce que le corps d'étanchéité en forme de U (38) possède une section transversale en forme de T et est disposé de telle sorte que les deux branches sont situées respectivement dans l'une des rainures en forme de U (22) tandis que la base fait saillie vers l'intérieur hors des rainures (22) entre les bords intérieurs de ces dernières.

7. Vanne de sectionnement selon l'une des revendications précédentes, caractérisée en ce que le corps d'étanchéité en forme de U (38) est réalisé en EPDM, en élastomère ou en un autre matériau approprié.

8. Vanne de sectionnement selon l'une des revendications précédentes, caractérisée en ce que le corps d'étanchéité (38) est armé, par exemple avec une armature d'acier.

9. Vanne de sectionnement selon l'une des revendications précédentes, caractérisée en ce que le volume en coupe transversale des rainures (22) d'une part et la section transversale du corps d'étanchéité en forme de U (38) sont dimensionnés de telle sorte que le corps d'étanchéité est situé également, à l'état non chargé, avec une précontrainte désirée dans le carter.

10. Vanne de sectionnement selon l'une des revendications précédentes, caractérisée en ce que la surface, tournée vers le tiroir, de la base du corps d'étanchéité (38) possède une forme convexe.

11. Vanne de sectionnement selon l'une des revendications précédentes, caractérisée en ce que la convexité est dimensionnée de telle sorte que même lorsque la plaque formant tiroir (16) est insérée, une certaine convexité subsiste au niveau des bords extérieurs de la surface de la base.

12. Vanne de sectionnement selon l'une des revendications précédentes, caractérisée en ce que l'épaisseur du corps d'étanchéité (38) est dimensionnée de telle sorte qu'à l'état non chargé, il est séparé, par une distance (40), des fonds, qui sont tournés respectivement vers ce corps, des rainures de la chambre formée par les rainures, perpendiculairement à la direction de traversée.

13. Vanne de sectionnement selon l'une des revendications précédentes, caractérisée en ce que la plaque formant tiroir (16) est réalisée, avec une forme de segment de cercle dans la zone d'extrémité inférieure, uniquement à proximité de l'axe de la broche, et est réalisée, à partir de là, avec une forme essentiellement rectiligne en direction des bords parallèles du tiroir, et le corps d'étanchéité (38) est réalisé avec une forme complémentaire.

14. Vanne de sectionnement comportant une plaque formant tiroir (16), qui est guidée latéralement sur des barrettes de guidage formées sur le carter, selon l'une des revendications précédentes, caractérisée en ce que les barrettes latérales de guidage de la plaque formant tiroir (16) sont disposées en retrait, au niveau de leurs sections d'extrémité inférieures, perpendiculairement à la direction longitudinale de la barrette de guidage (26) et parallèlement au plan de la plaque formant tiroir.

15. Vanne de sectionnement selon l'une des revendications précédentes, caractérisée en ce que le corps d'étanchéité en forme de U (38) comporte, dans ses parties d'extrémité supérieures, au niveau de la chambre de presse-étoupe, un évidement (82) approximativement en forme de segment de cercle.
